# EUROPÄISCHE PATENTSCHRIFT

(11) **EP 3 424 692 B1**
(45) Veröffentlichungstag und Bekanntmachung des Hinweises auf die Patenterteilung: **13.05.2020**
(21) Anmeldenummer: 18163520.2
(22) Anmeldetag: 23.03.2018
(51) Int. Cl.: B29D 30/00

(54) **VORRICHTUNG UND VERFAHREN ZUR BESTRAHLUNG VON ROHREIFEN MIT ELEKTRONENSTRAHLEN**
DEVICE AND METHOD FOR TREATING RAW TYRES WITH ELECTRON BEAMS
DISPOSITIF ET PROCÉDÉ D'IRRADIATION DES PNEUS BRUTS PAR FAISCEAUX D'ÉLECTRONS

(30) Priorität: 21.06.2017 DE 102017210336
(43) Veröffentlichungstag der Anmeldung: 09.01.2019
(73) Patentinhaber: Continental Reifen Deutschland GmbH, 30165 Hannover (DE)
(72) Erfinder: Reitmann, Sebastian, 31558 Hagenburg (DE); Lohner, Alexander, 30851 Langenhagen (DE)
(74) Vertreter: Finger, Karsten

(56) Entgegenhaltungen:
- DE-A1-102015 221 511
- JP-A- H 071 471

## Beschreibung

Die Erfindung betrifft eine Vorrichtung und ein Verfahren zur Bestrahlung von Rohreifen mit Elektronenstrahlen.

Bei der Reifenherstellung ist es bekannt, Rohreifen bzw. ihre aus Kautschukmischungen bestehenden Bauteile mittels Elektronenstrahlen oberflächlich vorzuvernetzen. Die vorvernetzten Reifenbauteile weisen gegenüber den aus "rohen" Kautschukmischungen gefertigten Reifenbauteilen eine reduzierte Fließfähigkeit und eine reduzierte Klebrigkeit auf.

Eine Vorrichtung und ein Verfahren der eingangs genannten Art sind beispielsweise aus der DE 10 2015 221 511 A1 bekannt. Die Vorrichtung umfasst eine Hauptkammer, an welche an gegenüberliegenden Seiten eine Eingangsschleuse und eine Ausgangsschleuse vorgesehen ist und welche eine Bestrahlungsquelle zum Vorvernetzten von Rohreifen aufweist. Das Handling der Rohreifen innerhalb der Hauptkammer erfolgt mittels einer drehbar angeordneten Greifeinrichtung, welche die Reifen von oben erfasst.

Die bislang bekannten Verfahren und Vorrichtungen sind insbesondere hinsichtlich der Auslastung der die Elektronenstrahlen erzeugenden Strahlungsquelle nicht zufriedenstellend. Auch die Handhabung der Rohreifen innerhalb der Bestrahlungskammern ist verbesserungsbedürftig, vor allem mangelt es an einer reproduzierbaren Vorvernetzung der Rohreifen und es gibt Probleme durch Beschädigungen der Vorrichtung während des Betriebes. Vor allem dem Fördersystem zum Transport der Rohreifen in die und aus der Bestrahlungskammer sowie innerhalb der Bestrahlungskammer kommt große Bedeutung zu, insbesondere besteht der Wunsch, Reifenrohlinge unterschiedlichster Abmessungen "wahllos" befördern und bestrahlen zu können. Die Handhabung der Rohreifen innerhalb der Bestrahlungskammer ist auf Grund der mangelnden Verfahrensüberwachung besonders kritisch. Nachdem bei der Bestrahlung mit Elektronen Röntgenstrahlung entsteht, ist der Einsatz von Halbleitertechnik, Sensorik und Servotechnik in der Bestrahlungskammer kaum möglich.

Der Erfindung liegt daher die Aufgabe zu Grunde, eine Vorrichtung und ein Verfahren zur Verfügung zu stellen, welche auf eine robuste, einfache und sichere Weise gestatten, Rohreifen unterschiedlicher Abmessungen gleichmäßig zu bestrahlen sowie die Rohreifen in die, aus der und innerhalb der Bestrahlungskammer zu befördern.

Was die Vorrichtung betrifft wird die gestellte Aufgabe erfindungsgemäß gelöst durch eine Vorrichtung, welcher auf Paletten rotierbar aufgespannte Rohreifen zugeführt werden und welche aufweist
- eine Bestrahlungskammer mit einer Elektronenstrahlquelle,
- eine Eingangsschleuse und eine Ausgangsschleuse, welche an die Bestrahlungskammer angrenzen und in welchen jeweils eine Fördereinrichtung angeordnet ist,
- einem in der Bestrahlungskammer angeordneten Gestell mit einer ersten Palettenauflage bei der Eingangsschleuse und einer zweiten Palettenauflage bei der Ausgangsschleuse, wobei jede Palettenauflage im Wesentlichen niveaugleich zu den Förderbändern ausrichtbar ist sowie gegenüber dem Gestell anheb- und absenkbar ist, wobei von der zweiten Palettenauflage Paletten in die Ausgangsschleuse schiebbar sind,
- zwei am Gestell unterhalb der Palettenauflagen angeordnete, an je eine Palette ankoppelbare schienengeführte Antriebseinheiten, mittels welchen die Paletten zwischen der ersten und der zweiten Palettenauflage verfahrbar und mittels welchen die auf den Paletten aufgespannten Rohreifen in Rotationsbewegung versetzbar sind.

Was das Verfahren betrifft wird die gestellte Aufgabe erfindungsgemäß gelöst durch ein Verfahren mit folgenden nacheinander ablaufenden Schritten:
a. Einfahren einer Palette mit einem aufgespannten Rohreifen in eine Eingangsschleuse,
b. Weitertransport der Palette in eine Bestrahlungskammer,
c. Ankoppeln der Palette an eine bei der Eingangsschleuse befindliche Antriebseinheit,
d. Rotieren des aufgespannten Rohreifens mittels der Antriebseinheit und Verfahren der Antriebseinheit mit angekoppelter Palette vor eine Elektronenstrahlquelle,
e. Vorvernetzen des rotierenden Rohreifens durch Bestrahlen mit Elektronenstrahlen,
f. Verfahren der den vorvernetzten Rohreifen tragenden Palette mit der Antriebseinheit zu einer Ausgangsschleuse unter Stoppen der Rotationsbewegung,
g. Abkoppeln der Palette mit dem vorvernetzten Rohreifen von der Antriebseinheit,
h. Verfahren der Palette in die Ausgangsschleuse sowie nachfolgendes Herausfahren der Palette aus der Ausgangsschleuse,
i. Wiederholung der Schritte a) bis h), wobei die Schritte abwechselnd von zwei Antriebseinheiten durchgeführt werden.

Gemäß der Erfindung ist daher vorgesehen, auf in Rotationsbewegung versetzbaren Paletten aufgespannte Rohreifen über eine Eingangsschleuse in eine Bestrahlungskammer einzubringen. Die Rohreifen werden außerhalb der Bestrahlungskammer auf den Paletten, je ein Rohreifen pro Palette, aufgespannt.

Erfindungsgemäß bleiben die Rohreifen während des Einschleusens, des Transportes in der Bestrahlungskammer und des Ausschleusens auf jeweils einer Palette aufgespannt. Dadurch werden die Rohreifen in Form gehalten und innerhalb der Bestrahlungskammer ist ein sicheres Handling der auf den Paletten aufgespannten Rohreifen ermöglicht. Dafür sorgen insbesondere die anhebbaren und absenkbaren Palettenauflagen und die Antriebseinheiten mit ihren speziellen Funktionen. Ein Umgreifen oder der eine Übergabe der Rohlinge innerhalb der Bestrahlungskammer entfällt. Daher ist ein Herunterfallen der Rohreifen von ihren Paletten innerhalb der Bestrahlungskammer ausgeschlossen. Eine visuelle Kontrolle ist vorteilhafter Weise nicht erforderlich.

Das erfindungsgemäße Verfahren arbeitet mit zwei unabhängig voneinander verfahrbaren Antriebseinheiten, sodass einige Verfahrensschritte für nacheinander zugeführte Rohreifen simultan ausgeführt werden können. Das erfindungsgemäße Verfahren weist gegenüber herkömmlichen Verfahren daher einen deutlich höheren Durchsatz auf.

Gemäß einer bevorzugten Ausführungsvariante sind die Palettenauflagen jeweils von einer Gruppe von frei drehbar gelagerten Rollen gebildet sind. Die Paletten lassen sich dann auf sehr einfache und robuste Weise in die Bestrahlungskammer hineinbefördern.

Ferner ist es bevorzugt, dass die Rollen, welche die Palettenauflage bilden, in Rotationsbewegung versetzbar sind, wodurch die Paletten ohne weitere Betätigungselemente, wie beispielsweise Schieber oder dergleichen, auf eine besonders elegante Weise in die Ausgangsschleuse beförderbar sind. In diesem Zusammenhang ist es ferner von Vorteil, wenn jede Gruppe von Rollen zumindest vier, insbesondere fünf, Rollen umfasst.

Eine besonders gleichmäßige Bestrahlung von Rohreifen unterschiedlicher Dimensionen ist möglich, wenn gemäß einer weiteren bevorzugten Ausführungsvariante das Gestell zur Einstellung des Abstandes des Rohreifens zur Elektronenstrahlquelle entlang von Schienen verfahrbar ist.

Für den Transport der Palette zwischen den Schleusen und der Bestrahlungskammer ist es von Vorteil, wenn die in den Schleusen angeordneten Förderbänder derart in horizontaler Richtung verschiebbar sind, dass sie jeweils ein Stück in die Bestrahlungskammer hinein und aus dieser wieder heraus bewegbar sind.

Gemäß einer weiteren bevorzugten Ausführungsvariante sind die schienengeführten Antriebseinheiten an am Gestell unterhalb der Palettenauflagen befindlichen Schienenführungen verfahrbar.

Gemäß einer weiteren bevorzugten Ausführungsvariante weist jede an eine Palette ankoppelbare Antriebseinheit eine nach oben weisende Kupplung zur Ankopplung der Palette auf.

Besondere Ausführungen des Verfahrens tragen insbesondere dazu bei, den Durchsatz zu erhöhen. In dieser Hinsicht ist es von Vorteil, wenn zwischen Schritt f) und Schritt g) mit einem weiteren Rohreifen Schritt d) und zumindest ein Teil des Schrittes e) durchgeführt werden. Ferner ist es in diesem Zusammenhang von Vorteil, wenn während des Schrittes g) gleichzeitig mit einem weiteren Rohreifen zumindest ein Teil des Schrittes e) durchgeführt wird.

Gemäß einer weiteren bevorzugten Variante des Verfahren ist vorgesehen, dass in Schritt b) die Palette von einem ein Stück in die Bestrahlungskammer hineinbewegten Förderband in die Bestrahlungskammer weitertransportiert wird.

Das Ankoppeln und das Abkoppeln der Palette von der jeweiligen Antriebseinheit erfolgt auf sehr einfache und besonders zuverlässige Weise, wenn in Schritt c) die Palette abgesenkt wird und/oder in Schritt h) die Palette angehoben wird.

Gemäß einer weiteren bevorzugten Verfahrensvariante wird in Schritt d) die Palette für das Bestrahlen gemäß Schritt e) der Elektronenstrahlquelle angenähert oder von dieser entfernt. Die Abstände von Rohreifen unterschiedlicher Dimensionen zur Elektronenstrahlquelle werden durch entsprechendes Ausrichten der Palette gegenüber der Elektronenstrahlquelle aneinander angeglichen.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf eine Ausführungsvariante der Vorrichtung gemäß der Erfindung,
Fig. 2 eine Seitenansicht der Vorrichtung aus Fig. 1,
Fig. 3a bis Fig. 3f Draufsichten auf die Vorrichtung aus Fig. 1 bzw. Fig. 2 in zeitlich aufeinanderfolgenden Verfahrensstadien.

Die in der nachfolgenden Beschreibung verwendeten Richtungsangaben, wie rechts, links, oben, unten und dergleichen, beziehen sich auf die Lage der einzelnen Bauteile der Vorrichtung wie in den Figuren gezeigt.

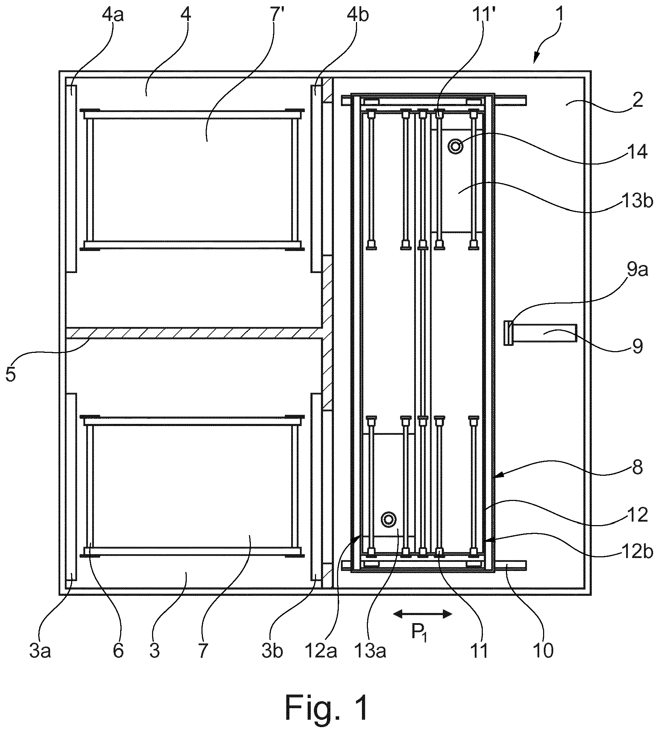

Fig. 1 zeigt ein Strahlenschutzgehäuse 1 mit einer in Draufsicht langgestreckten Bestrahlungskammer 2, einer Eingangsschleuse 3 und einer Ausgangsschleuse 4, wobei die Eingangsschleuse 3 und die Ausgangsschleuse 4 an die selbe Längsseite der Bestrahlungskammer 2 anschließen und durch eine Wand 5 voneinander getrennt sind.

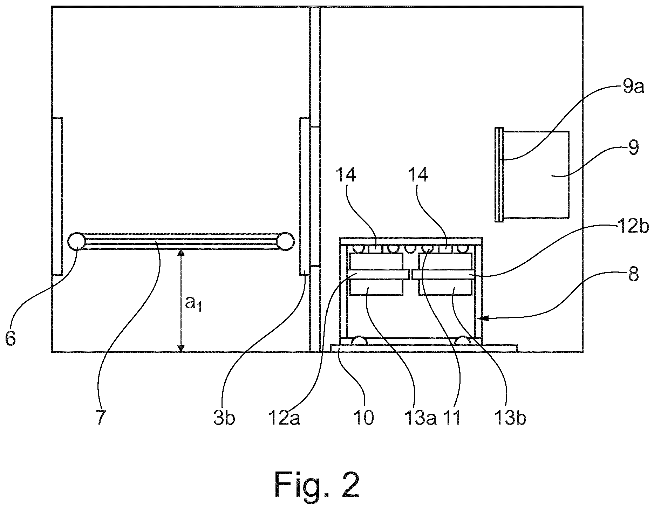

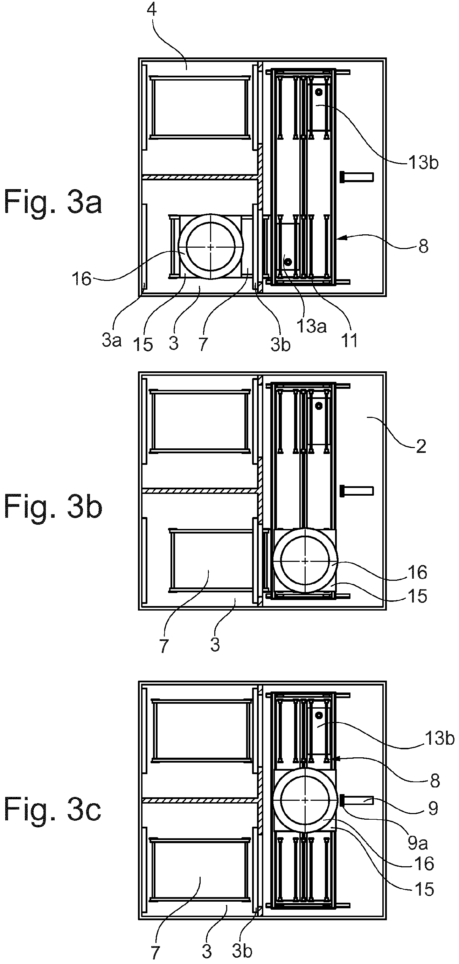

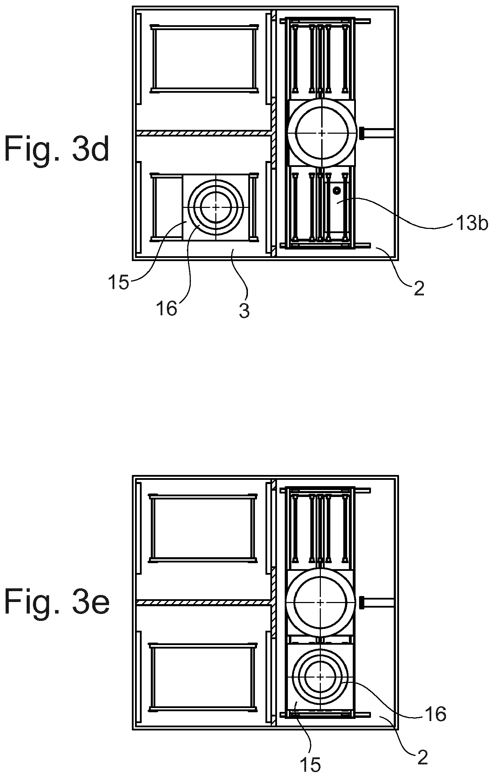

Die Eingangsschleuse 3 und die Ausgangsschleuse 4 weisen jeweils ein äußeres Schleusentor 3a, 4a und zur Bestrahlungskammer 2 ein inneres Schleusentor 3b, 4b auf, wobei die Schleusentore 3a, 4a, 3b, 4b zum Öffnen und Schließen der Eingangsschleuse 3 bzw. der Ausgangsschleuse 4 in vertikaler Richtung verschiebbar sind. In der Eingangsschleuse 3 ist ein Förderband 7 und in der Ausgangsschleuse ist ein Förderband 7' angeordnet. Die Förderbänder 7, 7' sind jeweils in einem Abstand a₁ (Fig. 2) vom Boden des Strahlenschutzgehäuses 1 sowie jeweils auf zwei Umlenkrollen 6 umlaufend angeordnet. Eine der Umlenkrollen 6 jedes Förderbandes 7, 7' ist in an sich bekannter Weise angetrieben, sodass die Förderbänder 7, 7' in Umlaufbewegung versetzbar sind. Bevorzugter Weise sind die beiden Umlenkrollen 6 jedes Förderbandes 7, 7' simultan derart in horizontaler Richtung, d.h. in und entgegen der Transportrichtung, geringfügig verschiebbar, dass die jeweils näher beim inneren Schleusentor 3b, 4b liegende Umlenkrolle 6 bei offenem innerem Schleusentor 3b, 4b ein Stück in die Bestrahlungskammer 2 hinein- und aus dieser wieder herausbewegbar ist (Fig. 3a, Fig. 3b und Fig. 3e).

Innerhalb der Bestrahlungskammer 2 ist neben den inneren Schleusentoren 3b, 4b ein in Draufsicht in Längserstreckung der Bestrahlungskammer 2 langgestrecktes Gestell 8 angeordnet, welches sich im Wesentlichen über den Bereich der inneren Schleusentore 3b, 4b erstreckt und daher knapp vor den entsprechenden Wänden des Strahlenschutzgehäuses 1 endet. Ferner ist im mittleren Bereich der Bestrahlungskammer 2 eine zur Vorvernetzung von Kautschukmischungen geeignete Elektronenstrahlquelle 9 mit einem für Elektronenstrahlen durchlässigen Bestrahlungsfenster 9a angeordnet. Die Elektronenstrahlquelle 9 ist an der der Eingangsschleuse 3 und der Ausgangsschleuse 4 abgewandten Seite des Gestells 8 sowie knapp oberhalb des Gestells 8 (Fig. 2) positioniert, wobei das Bestrahlungsfenster 9a dem Gestell 8 zugewandt ist.

Das Gestell 8 ist im Bereich seiner stirnseitigen Enden am Boden der Bestrahlungskammer 2 auf zwei parallel zueinander sowie senkrecht zu den inneren Schleusentoren 3b, 4b ausgerichteten Schienen 10 aufgesetzt. Wie in Fig. 1 durch den Doppelpfeil P1 angedeutet ist, ist das Gestell 8 entlang der Schienen 10 mittels eines nicht gezeigten Antriebes, insbesondere eines Linearantriebes, relativ zu den inneren Schleusentoren 3b, 4b und somit auch relativ zur Elektronenstrahlquelle 9 verfahrbar. Das Gestell 8 ist daher wahlweise näher zur Elektronenstrahlquelle 9 und näher zu den inneren Schleusentoren 3b, 4b positionierbar. Die Oberseite des Gestells 8 ist niveaugleich oder im Wesentlichen niveaugleich mit den Förderbändern 7, 7' (Fig. 2).

Wie Fig. 1 in Kombination mit Fig. 2 zeigt, sind auf dem Gestell 8 beim inneren Schleusentor 3b der Eingangsschleuse 3 fünf Rollen 11 und beim inneren Schleusentor 4b der Ausgangsschleuse 4 fünf Rollen 11' positioniert, wobei die Rollen 11, 11' im Wesentlichen an der Oberseite des Gestells 8 und daher im Wesentlichen niveaugleich zu den Förderbändern 7, 7' angeordnet sind. Die Rollen 11, 11' sind langgestreckt, in Längserstreckung des Gestells 8 ausgerichtet sowie frei drehbar gelagert. In Draufsicht sind im mittleren Bereich des Gestells 8 nebeneinander drei Rollen 11 bzw. drei Rollen 11' und an den Rändern des Gestelles 8 zwei Rollen 11 bzw. zwei Rollen 11' positioniert. Sämtliche Rollen 11 sowie sämtliche Rollen 11' sind jeweils gemeinsam mittels eines nicht gezeigten Antriebes in Rotationsbewegung versetzbar sowie ferner in vertikaler Richtung, beispielsweise mittels eines Pneumatikzylinders, geringfügig gegenüber dem Gestell 8 simultan anheb- und absenkbar.

Am Gestell 8 sind ferner knapp unterhalb der Rollen 11, 11' nebeneinander zwei in Draufsicht in Längserstreckung des Gestells 8 langgestreckte Schienenführungen 12a, 12b angeordnet, wobei sich die Schienenführung 12a in Draufsicht benachbart zu der der Eingangsschleuse 3 und der Ausgangsschleuse 4 zugewandten Längsseite des Gestells 8 und die Schienenführung 12b in Draufsicht benachbart zu der der Elektronenstrahlquelle 9 zugewandten Längsseite des Gestells 8 erstreckt. Die Schienenführungen 12a, 12b weisen jeweils ein Paar von parallel zueinander ausgerichteten ebenfalls entsprechend langgestreckten Schienen 12 auf. Auf den Schienen 12 der linken Schienenführung 12a ist eine Antriebseinheit 13a und auf den Schienen 12 der rechten Schienenführung 12b ist eine Antriebseinheit 13b angeordnet, wobei die Antriebseinheiten 13a, 13b jeweils entlang ihrer Schienen 12 verfahrbar sind. Die Antriebseinheiten 13a, 13b verfügen jeweils über eine nach oben weisende Kupplung 14, welche derart angeordnet ist, dass bei zu den Rollen 11, 11' verfahrenen Antriebseinheiten 13a, 13b, die jeweilige Kupplung 14 zwischen der jeweiligen am Rand des Gestells 8 positionierte Rolle 11, 11' und der jeweiligen im mittleren Bereich des Gestells 8 befindlichen Rolle 11, 11' zur Oberseite des Gestells 8 geführt ist. Die Antriebseinheiten 13a, 13b umfassen jeweils einen in den Figuren nicht gezeigten Drehstrommotor, mittels welchem die jeweilige Antriebseinheit 13a, 13b entlang der jeweiligen Schienenführung 12a, 12b verfahrbar ist.

Zum Transport der Rohreifen werden diese jeweils auf eine Palette 15 (siehe z.B. Fig. 3a) gespannt. Die zugehörige in den Figuren nicht gezeigte Spannvorrichtung ist rotierbar auf der Palette 15 gelagert. An ihrer Unterseite weist jede Spannvorrichtung einen Antriebsstrang auf, an welchen innerhalb der Bestrahlungskammer 1 die Antriebseinheit 13a oder die Antriebseinheit 13b, je nach Verfahrensstadium entweder die ein oder die andere, ankoppelbar ist. Die nacheinander in die Bestrahlungskammer 1 transportierten Paletten 15 sind derart orientiert, dass die Lage des Antriebsstranges der jeweiligen Palette 15 an die Position der Kupplung 14 der anzukoppelnden Antriebseinheit 13a, 13b angepasst ist, sodass eine Ankopplung erfolgen kann. Die angekoppelte Spannvorrichtung ist mittels der jeweiligen Antriebseinheit 13a, 13b gegenüber der Palette 15 in Rotationsbewegung versetzbar, sodass der auf ihr befindliche Rohreifen um seine Hauptachse rotiert. Die weitere Ausgestaltung der Spannvorrichtung ist nicht Gegenstand der Erfindung.

Nachfolgend wird der Ablauf des erfindungsgemäßen Verfahrens erläutert.

Da die Schleusentore 3a, 3b, 4a, 4b beim gezeigten Ausführungsbeispiel in vertikaler Richtung verschiebbar sind, sind deren im Nachfolgenden erwähnten Bewegungen aus den Draufsichten zeigenden Figuren 3a bis 3f nicht ersichtlich.

Zu Beginn sind die Eingangsschleuse 3 und die Ausgangsschleuse 4 beidseitig durch die Schleusentore 3a, 3b, 4a, 4b geschlossen und das Gestell 8 ist vorzugsweise derart auf den Schienen 10 verfahren, dass die vorzuvernetzenden Rohreifen nachfolgend einen zur Vorvernetzung geeigneten Abstand vom Bestrahlungsfenster 9a der Elektronenstrahlquelle 9 aufweisen (Fig. 1 und Fig. 2). Wie noch erläutert wird, kann das Gestell 8 auch noch später verfahren werden. Beim gezeigten Ausführungsbeispiel befinden sich die Antriebseinheit 13a gerade bei der Eingangsschleuse 3 und die Antriebseinheit 13b befindet sich gerade bei der Ausgangsschleuse 4. Es ist jedoch auch möglich, dass sich zu Beginn des Verfahrens die Antriebseinheiten 13a, 13b bei der jeweils anderen Schleuse 3, 4 befinden.

Außerhalb der Strahlenschutzkammer 1 wird ein Rohreifen 16, insbesondere mit einer in an sich bekannter Weise ausgeführten Greifeinrichtung, auf die Spannvorrichtung einer Palette 15 aufgespannt, wobei nachfolgend die Palette 15 mit einer vorzugsweise herkömmlichen Fördereinrichtung vor das äußere Schleusentor 3a der Eingangsschleuse 3 transportiert wird. Das äußere Schleusentor 3a der Eingangsschleuse 3 wird geöffnet und die den Rohreifen 16 tragende Palette 15 wird auf das in der Eingangsschleuse 3 befindliche Förderband 7 übergeben. Nach Schließen des äußeren Schleusentores 3a wird das innere Schleusentor 3b geöffnet und das Förderband 7 in Umlaufbewegung versetzt. Ist das Förderband 7, wie bereits erwähnt, verschiebbar, wird vorzugsweise unmittelbar nach Öffnen des inneren Schleusentores 3b das in Umlaufbewegung versetzte Förderband 7 ein Stück in die Bestrahlungskammer 1 hineinbewegt, wodurch sich der Abstand zwischen dem Förderband 7 und dem Gestell 8 verringert (Fig. 3a). Die Palette 15 wird auf die bei der Eingangsschleuse 3 befindlichen Rollen 11 und daher in die Bestrahlungskammer 2 geschoben (Fig. 3b).

Sobald die Palette 15 auf die Rollen 11 geschoben ist, wird das gegebenenfalls vorher verschobene Förderband 7 wieder zurück in die Eingangsschleuse 3 geschoben und das innere Schleusentor 3b wird geschlossen. Nachfolgend werden die Rollen 11 abgesenkt, sodass die Kupplung 14 der Antriebseinheit 13a an den Antriebstrang der Spannvorrichtung der Palette 15 angekoppelt wird. Die Antriebseinheit 13a versetzt die Spannvorrichtung mitsamt aufgespanntem Rohreifen 16 gegenüber der Palette 15 in Rotationsbewegung und fährt mitsamt der Palette 15 vor das Bestrahlungsfenster 9a der Elektronenstrahlquelle 9 (Fig. 3c). Optional kann mittels des erwähnten Linearantriebes auch jetzt noch, also nach Einbringen des Rohreifens 16 in die Bestrahlungskammer 1 und bevor dieser vor dem Bestrahlungsfenster 9a positioniert wird, das Gestell 8 entlang der Schienen 10 verschoben werden, um derart den Abstand zwischen dem Bestrahlungsfenster 9a und dem Rohreifen 16 für eine optimale Vorvernetzung einzustellen. Während der Bestrahlung wird vorzugsweise bereits der nächste Rohreifen 16 auf einer weiteren Palette 15 auf die beschriebene Weise über die Eingangsschleuse 3 (Fig. 3d) in die Bestrahlungskammer 2 transportiert und an die Antriebseinheit 13b, welche gegebenenfalls zuvor zur Eingangsschleuse 3 verfahren wird (Fig. 3d), auf die beschriebene Weise angekoppelt (Fig. 3e).

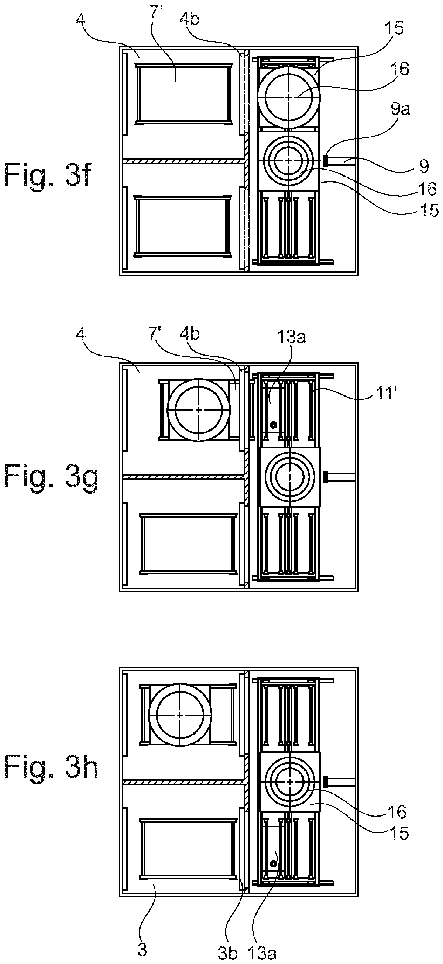

Sobald der Bestrahlungsvorgang abgeschlossen ist, fährt die Antriebseinheit 13a mitsamt der Palette 15 und dem auf ihr positionierten vorvernetzten Rohreifen 16 vor das innere Schleusentor 4b der Ausgangsschleuse 4 und damit über die Rollen 11', wobei die Rotationsbewegung der Spannvorrichtung der Palette 15 mit aufgespannten Rohreifen 16 langsam gestoppt wird (Fig. 3f). Unmittelbar danach wird der auf der nächsten, bereits angekoppelten Palette 15 befindliche Reifen in Rotationsbewegung versetzt und der Rohreifen 16 vor dem Bestrahlungsfenster 9a positioniert und dort bestrahlt, während die den bereits vorvernetzten Rohreifen 16 tragende Palette 15 mittels der Rollen 11' angehoben und von der Antriebseinheit 13a abgekoppelt wird, wobei in Fig. 3f die Antriebseinheit 13a von der entsprechenden Palette 15 verdeckt ist.

Das innere Schleusentor 4b der Ausgangsschleuse 4 wird geöffnet und es werden nachfolgend die Rollen 11' bei der Ausgangsschleuse 4 in Rotationsbewegung versetzt. Ist das Förderband 7' verschiebbar, wird dieses unmittelbar nach Öffnen des inneren Schleusentores 4b, wie bereits für das Förderband 7 beschrieben, in eine entsprechende Umlaufbewegung versetzt und in die Bestrahlungskammer 1 hineinbewegt (Fig. 3g). Die die den vorvernetzten Rohreifen 16 tragende Palette 15 wird auf das in der Ausgangsschleuse 4 befindliche Förderband 7' transportiert. Das innere Schleusentor 4b wird, gegebenenfalls nach Zurückfahren des Förderbandes 7, wieder geschlossen (Fig. 3h). Die Antriebeinheit 13a wird zurück vor das innere Schleusentor 3b der Eingangsschleuse gefahren (Fig. 3h). Der vorvernetzte Rohreifen 16 wird nach Öffnen des äußeren Schleusentores 4a aus der Ausgangsschleuse 4 mit einer vorzugsweise herkömmlichen Fördereinrichtung abtransportiert. Die bereits in der Strahlenkammer 1 befindliche, den nächsten Rohreifen 16 tragende Palette 13 wird durch Absenken der Rollen 11 an die Kupplung 14 der Antriebseinheit 13a angekoppelt (nicht gezeigt).

Der beschriebene Verfahrensablauf beginnt entsprechend von Neuem, wobei die nacheinander auf den Paletten 15 in die Bestrahlungskammer 2 transportierten Rohreifen 16 abwechselnd von der Antriebseinheit 13a und der Antriebseinheit 13b auf die beschriebene Weise innerhalb der Bestrahlungskammer 2 transportiert, in Rotationsbewegung versetzt und dabei vorvernetzt werden.

Bei einer bevorzugten Ausführungsvariante ist vor der Elektronenstrahlquelle 8 eine Abschirmeinrichtung (in den Figuren nicht gezeigt) angeordnet, mittels welcher gezielt Bauteile bzw. definierte Bereiche der vor das Bestrahlungsfenster 9a transportierten Rohreifen, die Seitenwände, ein Seitenwandbereich oder ein Spleißbereich während der Elektronenstrahlbehandlung gezielt abschirmbar sind. Anstelle der in der Eingangsschleuse 3 und der Ausgangsschleuse 4 befindlichen Förderbänder 7, 7' können andere Fördereinrichtungen, beispielsweise Rollenförderer, vorgesehen sein.

Ein vollautomatischer Ablauf des erfindungsgemäßen Verfahrens ist durch eine entsprechende Rechnersteuerung sichergestellt. Die dazu erforderliche Hard- und Software sind nicht Gegenstand der Erfindung.

### Bezugszeichenliste

- 1......................: Strahlenschutzgehäuse
- 2 ......................: Bestrahlungskammer
- 3 ......................: Eingangsschleuse
- 3a ....................: äußeres Schleusentor
- 3b ....................: inneres Schleusentor
- 4 ......................: Ausgangsschleuse
- 4a ....................: äußeres Schleusentor
- 4b ....................: inneres Schleusentor
- 5 ......................: Wand
- 6 ......................: Umlenkrolle
- 7, 7' .................: Förderband
- 8 ......................: Gestell
- 9 ......................: Elektronenstrahlquelle
- 9a ....................: Bestrahlungsfenster
- 10....................: Schiene
- 11, 11' .............: Rolle
- 12 ....................: Schiene
- 12a, 12b...........: Schienenführung
- 13a, 13b...........: Antriebseinheit
- 14 ....................: Kupplung
- 15 ...................: Palette
- 16 ....................: Rohreifen
- a₁ .....................: Abstand

## Patentansprüche

1. Vorrichtung zur Bestrahlung von Rohreifen (16) mit Elektronenstrahlen, wobei die Rohreifen (16) der Vorrichtung auf Paletten (15) rotierbar aufgespannt zugeführt werden, umfassend:
- eine Bestrahlungskammer (2) mit einer Elektronenstrahlquelle (9),
- eine Eingangsschleuse (3) und eine Ausgangsschleuse (4), welche an die Bestrahlungskammer (2) angrenzen und in welchen jeweils eine Fördereinrichtung (7, 7') angeordnet ist,
- einem in der Bestrahlungskammer (2) angeordneten Gestell (8) mit einer ersten Palettenauflage (11) bei der Eingangsschleuse (3) und einer zweiten Palettenauflage (11') bei der Ausgangsschleuse (4), wobei jede Palettenauflage (11, 11') im Wesentlichen niveaugleich zu den Förderbändern (7, 7') ausrichtbar ist sowie gegenüber dem Gestell (8) anheb- und absenkbar ist, wobei auf die zweite Palettenauflage (11') Paletten (15) in die Ausgangsschleuse (4) schiebbar sind, **dadurch gekennzeichnet, dass**
- zwei am Gestell (8) unterhalb der Palettenauflagen (11, 11') angeordnete, an je eine Palette (15) ankoppelbare schienengeführte Antriebseinheiten (13a, 13b), mittels welchen die Paletten (15) zwischen der ersten und der zweiten Palettenauflage (11, 11') verfahrbar und mittels welchen die auf den Paletten (15) aufgespannten Rohreifen (16) in Rotationsbewegung versetzbar sind.

2. Vorrichtung nach Anspruch 1, **dadurch gekennzeichnet, dass** die Palettenauflagen (11, 11') jeweils von einer Gruppe von frei drehbar gelagerten Rollen (11, 11') gebildet sind.

3. Vorrichtung nach Anspruch 2, **dadurch gekennzeichnet, dass** die Rollen (11, 11'), welche die Palettenauflagen (11, 11') bilden, in Rotationsbewegung versetzbar sind.

4. Vorrichtung nach einem der Ansprüche 2 oder 3, **dadurch gekennzeichnet, dass** jede Gruppe von Rollen (11, 11') zumindest vier, insbesondere fünf, Rollen (11, 11') umfasst.

5. Vorrichtung nach einem der Ansprüche 1 bis 4, **dadurch gekennzeichnet, dass** das Gestell (8) zur Einstellung des Abstandes des Rohreifens (16) zur Elektronenstrahlquelle (9) entlang von Schienen (10) verfahrbar ist.

6. Vorrichtung nach einem der Ansprüche 1 bis 5, **dadurch gekennzeichnet, dass** die in den Schleusen (3, 4) angeordneten Förderbänder (7, 7') derart in horizontaler Richtung verschiebbar sind, dass sie jeweils ein Stück in die Bestrahlungskammer (2) hinein und aus dieser wieder heraus bewegbar sind.

7. Vorrichtung nach einem der Ansprüche 1 bis 6, **dadurch gekennzeichnet, dass** die schienengeführten Antriebseinheiten (13a, 13b) an am Gestell (8) unterhalb der Palettenauflagen (11, 11') befindlichen Schienenführungen (12, 12b) verfahrbar sind.

8. Vorrichtung nach einem der Ansprüche 1 bis 7, **dadurch gekennzeichnet, dass** jede an eine Palette (15) ankoppelbare Antriebseinheit (13a, 13b) eine nach oben weisende Kupplung (14) zur Ankopplung der Palette (15) aufweist.

9. Verfahren zur Bestrahlung von Rohreifen (16) mit Elektronenstrahlen mit folgenden nacheinander ablaufenden Schritten:
a. Bereitstellen einer Vorrichtung nach Anspruch 1,
b. Einfahren einer Palette (15) mit einem aufgespannten Rohreifen (16) in eine Eingangsschleuse (3),
c. Weitertransport der Palette (15) in eine Bestrahlungskammer (2),
d. Ankoppeln der Palette (15) an eine bei der Eingangsschleuse (3) befindliche Antriebseinheit (13a),
e. Rotieren des aufgespannten Rohreifens (16) mittels der Antriebseinheit (13a) und Verfahren der Antriebseinheit (13a) mit angekoppelter Palette (15) vor eine Elektronenstrahlquelle (9),
f. Vorvernetzen des rotierenden Rohreifens (16) durch Bestrahlen mit Elektronenstrahlen,
g. Verfahren der den vorvernetzten Rohreifen (16) tragenden Palette (13) mit der Antriebseinheit (13a) zu einer Ausgangsschleuse (4) unter Stoppen der Rotationsbewegung,
h. Abkoppeln der Palette mit dem vorvernetzten Rohreifen (16) von der Antriebseinheit (13a)
i. Verfahren der Palette (15) in die Ausgangsschleuse (4) sowie nachfolgendes Herausfahren der Palette aus der Ausgangsschleuse (4),
j. Wiederholung der Schritte a) bis h), wobei die Schritte abwechselnd von zwei Antriebseinheiten (12a, 12b) durchgeführt werden.

10. Verfahren nach Anspruch 9, **dadurch gekennzeichnet, dass** während des Schrittes e) gleichzeitig die Schritte a) bis c) mit einem weiteren Rohreifen durchgeführt werden.

11. Verfahren nach Anspruch 9 oder 10, **dadurch gekennzeichnet, dass** zwischen Schritt f) und Schritt g) mit einem weiteren Rohreifen (16) Schritt d) und zumindest ein Teil des Schrittes e) durchgeführt werden.

12. Verfahren nach einem der Ansprüche 9 bis 11, **dadurch gekennzeichnet, dass** während des Schrittes g) gleichzeitig mit einem weiteren Rohreifen (16) zumindest ein Teil des Schrittes e) durchgeführt wird.

13. Verfahren nach einem der Ansprüche 9 bis 12, **dadurch gekennzeichnet, dass** in Schritt b) die Palette (15) von einem ein Stück in die Bestrahlungskammer (1) hineinbewegten Förderband (7) in die Bestrahlungskammer (2) weitertransportiert wird.

14. Verfahren nach einem der Ansprüche 9 bis 13, **dadurch gekennzeichnet, dass** in Schritt c) die Palette (15) abgesenkt wird und/oder in Schritt h) die Palette (15) angehoben wird.

15. Verfahren nach einem der Ansprüche 9 bis 14, **dadurch gekennzeichnet, dass** in Schritt d) die Palette (15) für das Bestrahlen gemäß Schritt e) der Elektronenstrahlquelle (9) angenähert oder von dieser entfernt wird.

## Claims

1. Device for irradiating green tyres (16) with electron beams, wherein the green tyres (16) are fed to the device while mounted rotatably on pallets (15), comprising:
- an irradiating chamber (2) with an electron beam source (9),
- an input lock (3) and an output lock (4), which adjoin the irradiating chamber (2) and in which a conveying device (7, 7') is respectively arranged,
- a framework (8), arranged in the irradiating chamber (2) and having a first pallet support (11) at the input lock (3) and a second pallet support (11') at the output lock (4), wherein each pallet support (11, 11') can be aligned substantially at the same level in relation to the conveyor belts (7, 7') and also can be raised and lowered with respect to the framework (8), wherein pallets (15) can be pushed into the output lock (4), onto the second pallet support (11'), **characterized in that**
- two rail-guided drive units (13a, 13b), which are arranged on the framework (8) underneath the pallet supports (11, 11') and can be coupled to a pallet (15) each, by means of which the pallets (15) can be moved between the first and second pallet supports (11, 11') and by means of which the green tyres (16) mounted on the pallets (15) can be set in rotational motion.

2. Device according to Claim 1, **characterized in that** the pallet supports (11, 11') are respectively formed by a group of freely rotatably mounted rollers (11, 11').

3. Device according to Claim 2, **characterized in that** the rollers (11, 11'), which form the pallet supports (11, 11'), can be set in rotational motion.

4. Device according to either of Claims 2 and 3, **characterized in that** each group of rollers (11, 11') comprises at least four, in particular five, rollers (11, 11').

5. Device according to one of Claims 1 to 4, **characterized in that** the framework (8) can be moved along rails (10) for setting the distance of the green tyre (16) from the electron beam source (9).

6. Device according to one of Claims 1 to 5, **characterized in that** the conveyor belts (7, 7') arranged in the locks (3, 4) are displaceable in the horizontal direction in such a way that they can each be moved some way into the irradiating chamber (2) and out of it again.

7. Device according to one of Claims 1 to 6, **characterized in that** the rail-guided drive units (13a, 13b) can be moved on rail guides (12, 12b) located on the framework (8) underneath the pallet supports (11, 11').

8. Device according to one of Claims 1 to 7, **characterized in that** each drive unit (13a, 13b) that can be coupled to a pallet (15) has an upwardly facing coupling (14) for the coupling of the pallet (15).

9. Method for irradiating green tyres (16) with electron beams comprising the following successive steps:
a. providing a device according to Claim 1,
b. moving a pallet (15) with a mounted green tyre (16) into an input lock (3),
c. transporting the pallet (15) further into an irradiating chamber (2),
d. coupling the pallet (15) to a drive unit (13a) located at the input lock (3),
e. rotating the mounted green tyre (16) by means of the drive unit (13a) and moving the drive unit (13a) with the coupled pallets (15) in front of an electron beam source (9),
f. pre-crosslinking the rotating green tyre (16) by irradiating with electron beams,
g. moving the pallet (13), carrying the pre-crosslinked green tyre (16), by the drive unit (13a) to an output lock (4) by stopping the rotational motion,
h. uncoupling the pallet with the pre-crosslinked green tyre (16) from the drive unit (13a),
i. moving the pallet (15) into the output lock (4) and subsequently moving the pallet out of the output lock (4),
j. repeating steps a) to h), wherein the steps are carried out alternately by two drive units (12a, 12b).

10. Method according to Claim 9, **characterized in that**, during step e), at the same time steps a) to c) are carried out with a further green tyre.

11. Method according to Claim 9 or 10, **characterized in that**, between step f) and step g), step d) and at least part of step e) are carried out with a further green tyre (16).

12. Method according to one of Claims 9 to 11, **characterized in that**, during step g), at the same time at least part of step e) is carried out with a further green tyre (16).

13. Method according to one of Claims 9 to 12, **characterized in that**, in step b), the pallet (15) is transported further into the irradiating chamber (2) by a conveyor belt (7) moved some way into the irradiating chamber (1).

14. Method according to one of Claims 9 to 13, **characterized in that**, in step c), the pallet (15) is lowered and/or, in step h), the pallet (15) is raised.

15. Method according to one of Claims 9 to 14, **characterized in that**, in step d), the pallet (15) is brought closer to or further away from the electron beam source (9) for irradiating according to step e).

## Revendications

1. Ensemble pour irradier des bandages de roue bruts (16) par des faisceaux d'électrons, les bandages de roue bruts (16) étant apportés à l'ensemble sur des palettes (15) sur lesquelles ils sont montés de manière à pouvoir tourner, l'ensemble comprenant :
- une chambre d'irradiation (2) dotée d'une source (9) de faisceaux d'électrons,
- un sas d'entrée (3) et un sas de sortie (4) adjacent à la chambre d'irradiation (2) et dans chacun desquels est disposé un dispositif de transport (7, 7'),
- un bâti (8) disposé dans la chambre d'irradiation (2) et présentant un premier support (11) de palettes du côté du sas d'entrée (3) et un deuxième support de palettes (11') du côté du sas de sortie (4), chaque support de palettes (11, 11') pouvant être aligné essentiellement au même niveau que les bandes transporteuses (7, 7') et pouvant être relevé et abaissé par rapport au bâti (8), des palettes (15) situées sur le support de palettes (11') pouvant être glissées dans le sas de sortie (4),
**caractérisé en ce que**
- deux unités d'entraînement (13a, 13b) au moyen desquelles les palettes (15) peuvent être déplacées entre le premier et le deuxième support de palettes (11, 11') et au moyen desquelles les bandages de roue bruts (16) montés sur les palettes (15) peuvent être mis en déplacement de rotation, guidées sur des rails et pouvant être reliées chacune à une palette (15), sont disposées sur le bâti (8) en dessous des supports de palettes (11, 11').

2. Ensemble selon la revendication 1, **caractérisé en ce que** les supports de palettes (11, 11') sont chacun formé d'un groupe de rouleaux (11, 11') montés à rotation libre.

3. Ensemble selon la revendication 2, **caractérisé en ce que** les rouleaux (11, 11') qui forment les supports de palettes (11, 11') peuvent être mis en déplacement de rotation.

4. Ensemble selon les revendications 2 ou 3, **caractérisé en ce que** chaque groupe de rouleaux (11, 11') comporte au moins quatre et en particulier cinq rouleaux (11, 11').

5. Ensemble selon les revendications 1 à 4, **caractérisé en ce que** le bâti (8) peut être déplacé le long de rails (10) pour régler la distance du bandage de roue brut (16) par rapport à la source (9) de faisceaux d'électrons.

6. Ensemble selon les revendications 1 à 5, **caractérisé en ce que** les bandes transporteuses (7, 7') disposés dans les sas (3, 4) peuvent être déplacées dans la direction horizontale de manière à pouvoir être avancées peu à peu dans la chambre d'irradiation (2) et être extraites de cette dernière.

7. Ensemble selon les revendications 1 à 6, **caractérisé en ce que** les unités d'entraînement (13a, 13b) guidées sur rails peuvent être déplacées sur des rails de guidage (12, 12b) situés sur le bâti (8) en dessous des supports de palettes (11, 11').

8. Ensemble selon les revendications 1 à 7, **caractérisé en ce que** chaque unité d'entraînement (13a, 13b) apte à être raccordée à une palette (15) présente un accouplement (14) orienté vers le haut permettant le raccordement à la palette (15).

9. Procédé d'irradiation de bandages de roue bruts (16) par des faisceaux d'électrons, le procédé présentant les étapes suivantes qui se déroulent successivement :
a. préparation d'un ensemble selon la revendication 1,
b. introduction d'une palette (15) sur laquelle est monté un bandage de roue brut (16) dans un sas d'entrée (3),
c. poursuite du transport de la palette (15) dans une chambre d'irradiation (2),
d. raccordement de la palette (15) à une unité d'entraînement (13a) située du côté du sas d'entrée (3),
e. au moyen de l'unité d'entraînement (13a), mise en rotation du bandage de roue brut (16) monté, et passage de l'unité d'entraînement (13a) sur laquelle est raccordée la palette (15) devant une source (9) de faisceaux d'électrons,
f. pré-réticulation du bandage de roue brut (16) en rotation par irradiation par des faisceaux d'électrons,
g. déplacement de la palette (13) portant le bandage de roue brut (16) pré-réticulé à l'aide de l'unité d'entraînement (13a) vers un sas de sortie (4), avec arrêt du déplacement de rotation,
h. désaccouplement de la palette portant le bandage de roue brut (16) pré-réticulé par rapport à l'unité d'entraînement (13a),
i. déplacement de la palette (15) dans le sas de sortie (4) et ensuite extraction de la palette hors du sas de sortie (4) et
j. répétition des étapes a) à h), les étapes étant réalisées en alternance par deux unités d'entraînement (12a, 12b).

10. Procédé selon la revendication 9, **caractérisé en ce que** les étapes a) à c) sont réalisées sur un autre bandage de roue brut en même temps que l'étape e).

11. Procédé selon les revendications 9 ou 10, **caractérisé en ce que** l'étape d) et au moins une partie de l'étape e) sont réalisées sur un autre bandage de roue brut (16) entre l'étape f) et l'étape g).

12. Procédé selon l'une des revendications 9 à 11, **caractérisé en ce qu'**au moins une partie de l'étape e) est réalisée sur un autre bandage de roue brut (16) en même temps que l'étape g).

13. Procédé selon l'une des revendications 9 à 12, **caractérisé en ce que** à l'étape b), la palette (15) est transportée dans la chambre d'irradiation (2) par une bande transporteuse (7) avancée d'un pas dans la chambre d'irradiation (1).

14. Procédé selon l'une des revendications 9 à 13, **caractérisé en ce que** à l'étape c), la palette (15) est abaissée et/ou à l'étape h), la palette (15) est relevée.

15. Procédé selon l'une des revendications 9 à 14, **caractérisé en ce que** à l'étape d), la palette (15) est approchée de la source (9) de faisceaux d'électrons ou éloignée de cette dernière en vue de la réalisation de l'étape e).
